# EUROPÄISCHE PATENTSCHRIFT

(11) **EP 1 692 390 B1**
(45) Veröffentlichungstag und Bekanntmachung des Hinweises auf die Patenterteilung: **21.05.2008**
(21) Anmeldenummer: 05792124.9
(22) Anmeldetag: 14.10.2005
(51) Int. Cl.: F02M 25/07, F02D 21/08, F02D 41/22

(54) **VERFAHREN ZUR RÜCKFÜHRUNG EINES TEILSTROMES AN ABGAS ZU EINEM VERBRENNUNGSMOTOR EINES KRAFTFAHRZEUGES**
METHOD FOR RECIRCULATING A PARTIAL EXHAUST GAS FLOW TO AN INTERNAL COMBUSTION ENGINE OF A MOTOR VEHICLE
PROCEDE DE RENVOI D'UN COURANT PARTIEL DE GAZ D'ECHAPPEMENT AU MOTEUR A COMBUSTION INTERNE D'UN VEHICULE AUTOMOBILE

(30) Priorität: 26.11.2004 DE 102004057306
(43) Veröffentlichungstag der Anmeldung: 23.08.2006
(73) Patentinhaber: Continental Automotive GmbH, 30165 Hannover (DE)
(72) Erfinder: HANNEWALD, Thomas, 64347 Griesheim (DE); KERN, Eckhart, 65719 Hofheim (DE)
(86) Internationale Anmeldenummer: PCT/EP2005/055257
(87) Internationale Veröffentlichungsnummer: WO 2006/056511

(56) Entgegenhaltungen:
- EP-A- 1 275 838
- EP-A- 1 363 013
- WO-A-01/42639
- WO-A-02/077428
- WO-A-03/098026
- DE-A1- 10 041 579
- DE-C2- 19 680 305
- US-A1- 2003 192 516
- PATENT ABSTRACTS OF JAPAN Bd. 2000, Nr. 13, 5. Februar 2001 (2001-02-05) -& JP 2000 274315 A (ISUZU MOTORS LTD), 3. Oktober 2000 (2000-10-03)
- PATENT ABSTRACTS OF JAPAN Bd. 015, Nr. 286 (M-1138), 19. Juli 1991 (1991-07-19) -& JP 03 100363 A (MAZDA MOTOR CORP), 25. April 1991 (1991-04-25)

## Beschreibung

Die Erfindung bezieht sich auf ein Verfahren zur Rückführung eines Teilstromes an Abgas zu einem Verbrennungsmotor eines Kraftfahrzeuges. Die Erfindung bezieht sich ferner auf eine Vorrichtung zur Durchführung des Verfahrens.

Verfahren zur Rückführung von Teilströmen an Abgasen zu einem Verbrennungsmotor sind bekannt. In der DE-PS 196 80 305 C2 wird ein Abgasrezirkulationssystem für einen Innenverbrennungsmotor beschrieben. Bei diesem System wird ein Teil der von dem Motor produzierten Abgase von einer Auslassleitung des Motors in eine Einlassleitung des Motors rezirkuliert, wobei das Abgasrezirkulationssystem hinter der Auslassleitung des Motors eine Rezirkulationsleitung aufweist. Diese Rezirkulationsleitung splittet sich in eine Bypassleitung und eine Kühlerleitung mit eingebautem Kühler auf. Die Bypassleitung und die Kühlerleitung weisen an ihrem Ende jeweils ein Ventil auf, hinter denen die Bypassleitung und die Kühlerleitung wieder zu einer einheitlichen Leitung zusammengefasst werden. Über diese gelangt dann der Teilstrom an Abgas wieder in den Motor. Bei diesem Verfahren ist jedoch nachteilig, dass sich die beiden Ventile durch im Abgas befindliche Partikeln und Kondensatprodukte relativ schnell zusetzen, was zum einen den eigentlichen Betrieb und zum anderen das Ansteuern der beiden Ventile, die im Wechsel zueinander vollständig geöffnet oder geschlossen werden, auswirkt. Die Ansteuerung der Ventile erfolgt über eine elektronische Steuereinheit, die dafür sorgt, dass der Teilstrom der Abgase bei Betriebszuständen niedriger Motortemperatur beziehungsweise niedriger Motorlast über die Bypassleitung und an anderen Motorbetriebszuständen über die Kühlerleitung erfolgt. Durch das Zusetzen der Ventile wird die Ansteuerung durch die elektronische Steuereinheit nachteilig beeinflusst, so dass auf schwankende Abgasbedingungen nur zeitverzögert reagiert werden kann. Ein weiteres gattungsgemäßes Abgasrezirkulationssystem ist der EP 1 275 838 A1 zu entnehmen. Der Erfindung liegt daher die Aufgabe zugrunde, ein Verfahren zur Rückführung eines Teilstromes an Abgas zu einem Verbrennungsmotors eines Kraftfahrzeuges zu schaffen, bei dem das Zusetzen von Absperrorganen weitgehend vermieden wird. Der Erfindung liegt ferner die Aufgabe zugrunde, eine Vorrichtung zur Durchführung des Verfahrens zu schaffen.

Die der Erfindung zugrunde liegende Aufgabe wird durch ein Verfahren zur Rückführung eines Teilstromes an Abgas zu einem Verbrennungsmotors eines Kraftfahrzeuges gelöst, bei dem der Teilstrom durch eine hinter dem Abgasaustritt des Verbrennungsmotors angeordnete Teilstromleitung geleitet wird und unmittelbar danach entweder über ein erstes Ventil, einer direkt nachgeschalteten Bypassleitung und einer Rückführleitung dem Verbrennungsmotor zugeführt wird oder über ein zweites Ventil, einem direkt nachgeschalteten Kühler und einer Rückführleitung dem Verbrennungsmotor zugeführt wird, wobei das erste Ventil und das zweite Ventil in Abhängigkeit von den Abgasbedingungen geöffnet oder geschlossen werden, wobei dies von einem Sensor überwacht wird. Sowohl das erste Ventil als auch das zweite Ventil befinden sich in Parallelschaltung zwischen der Teilstromleitung und der Bypassleitung beziehungsweise des Kühlers. Sie werden im Betrieb gekühlt. Durch den Sensor werden die Betriebszustände des ersten Ventils und des zweiten Ventils, die in Abhängigkeit von den Abgasbedingungen einzustellen sind, überwacht. Dabei sind Mittelstellungen möglich, so dass dem ersten Ventil und dem zweiten Ventil zwei Funktionen zuzuordnen sind. Zum einen wird über sie gesteuert, ob der Teilstrom durch die Bypassleitung oder durch den Kühler geleitet wird. Zum anderen lässt sich mit ihnen die Größe beziehungsweise Menge des Teilstromes einstellen.

Es hat sich in überraschender Weise gezeigt, dass bei dem Verfahren Ablagerungen im ersten Ventil und im zweiten Ventil nach relativ kurzen Betriebszeiten vermieden werden. Die durch das erste Ventil beziehungsweise durch das zweite Ventil geleiteten Abgase weisen immer noch eine solch hohe Temperatur auf, dass es nicht zu Anbackungen im ersten Ventil beziehungsweise im zweiten Ventil kommt. Nachteilige Kondensatprodukte fallen weder im ersten Ventil noch im zweiten Ventil an, da die Bypassleitung beziehungsweise der Kühler dem ersten Ventil beziehungsweise dem zweiten Ventil jeweils nachgeschaltet sind. Ferner ist vorteilhaft, dass sich sowohl das erste Ventil als auch das zweite Ventil über relativ lange Betriebszeiten nahezu verzögerungsfrei ansteuern lassen, so dass auf schwankende Abgasbedingungen relativ schnell reagiert werden kann.

Eine bevorzugte Ausgestaltung der Erfindung besteht darin, dass der Teilstrom durch eine Ventileinheit geleitet wird, die das erste Ventil und das zweite Ventil und den Sensor enthält. Die Zusammenfassung des ersten Ventils, des zweiten Ventils und des Sensors zu einer Ventileinheit führt in vorteilhafter Weise zu einer Verringerung des Bauraumes, was in der Regel in Kraftfahrzeugen gewünscht ist. Ferner eignet sich der Einsatz einer Ventileinheit vorteilhaft für eine Vorabfertigung, was den Herstellungsprozess begünstigt.

Gemäß einer weiteren Ausgestaltung der Erfindung wird der Teilstrom hinter dem zweiten Ventil durch einen als nachgeschalteten Kühler angeordneten Kühler mit flüssigem Kühlmittel geleitet, wobei das flüssige Kühlmittel sowohl durch den nachgeschalteten Kühler als auch durch die Ventileinheit geleitet wird. Als flüssiges Kühlmittel werden in der Regel Wassergemische eingesetzt. Dabei ist es in der Regel vorteilhaft, wenn die Ventileinheit und der nachgeschaltete Kühler ein gemeinsames Gehäuse aufweisen, durch das das flüssige Kühlmittel beispielsweise durch Kühlschlangen geleitet wird. Auf diese Weise wird vorteilhaft Bauraum eingespart und die Kühlung optimiert.

Die der Erfindung zugrunde liegende Aufgabe wird ferner durch eine Vorrichtung zur Durchführung des Verfahrens gelöst, die aus einer Teilstromleitung besteht, die mit einem ersten Ventil und einem zweiten Ventil verbunden ist, wobei das erste Ventil über eine Bypassleitung mit einer Rückführleitung verbunden ist und das zweite Ventil über einen direkt nachgeschalteten Kühler mit einer Rückführleitung verbunden ist, und wobei ein Sensor angeordnet ist, der sowohl die Ansteuerung des ersten Ventils und des zweiten Ventils in Abhängigkeit von den Abgasbedingungen überwacht. Durch die Anordnung des ersten Ventils und des zweiten Ventils vor der Bypassleitung beziehungsweise vor dem direkt nachgeschalteten Kühler lassen sich Ablagerungen im ersten Ventil und im zweiten Ventil derart vorteilhaft vermeiden, dass eine relativ schnelle Ansteuerung auch bei schwankenden Abgasbedingungen gewährleistet ist.

Nach einer weiteren Ausgestaltung der Erfindung ist vorgesehen, dass als nachgeschalteter Kühler ein Kühler mit flüssigem Kühlmittel angeordnet ist. Auf diese Weise lassen sich die Abgase relativ schnell auf eine niedrigere Temperatur bringen.

Eine weitere Ausgestaltung der Erfindung sieht vor, dass eine Ventileinheit angeordnet ist, die das erste Ventil und das zweite Ventil und den Sensor enthält. Es handelt sich dabei um eine konstruktive Teileinheit, durch deren Anordnung sich der erforderliche Bauraum vorteilhaft verkleinern lässt.

Gemäß einer weiteren Ausgestaltung der Erfindung enthält der nachgeschaltete Kühler einen Kühlmitteleintritt und die Ventileinheit ein Kühlmittelaustritt. Dies bedeutet, dass sowohl der nachgeschaltete Kühler als auch die Ventileinheit von ein und demselben Kühlmittel durchströmt und somit gekühlt werden, was sich ebenfalls vorteilhaft auf die Verkleinerung des Bauraums auswirkt. Der Kühlmitteleintritt und der Kühlmittelaustritt können beispielsweise in Form von Rohrstutzen vorteilhaft ausgebildet sein.

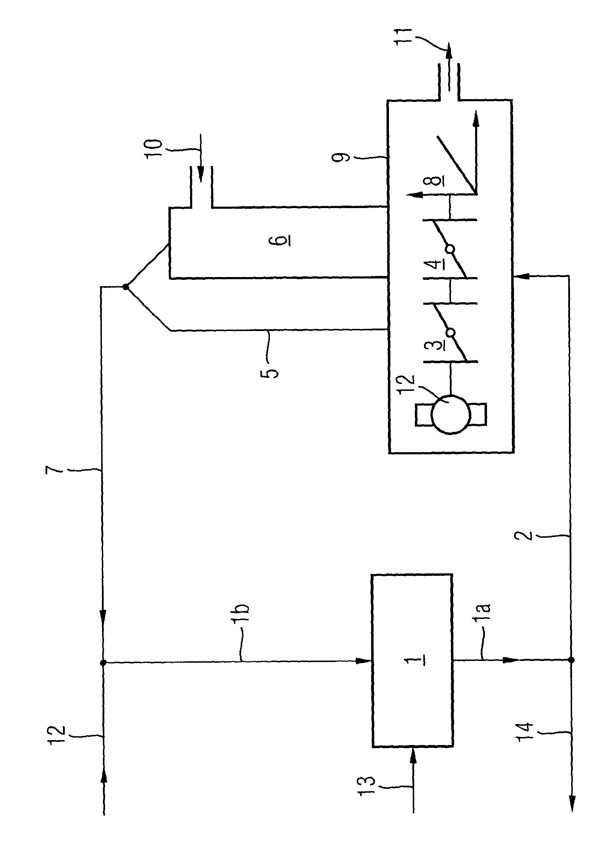

Die Erfindung wird nachfolgend anhand der Zeichnung (Fig.) näher und beispielhaft erläutert.

Fig. zeigt ein Verfahrensfließbild des Verfahrens zur Rückführung eines Teilstroms an Abgas zu einem Verbrennungsmotor eines Kraftfahrzeuges.

In Fig. ist das Verfahrensfließbild des Verfahrens zur Rückführung eines Teilstromes an Abgas zu einem Verbrennungsmotor 1 eines Kraftfahrzeuges dargestellt. Das Abgas gelangt aus dem Verbrennungsmotor 1 über den Abgasaustritt 1a in die Teilstromleitung 2. In der Teilstromleitung 2 wird dann lediglich noch der Teilstrom an Abgas geleitet. Die restliche Menge an Abgas gelangt über die Auspuffleitung 14 zum Auspuff (nicht dargestellt). Der Teilstrom an Abgas wird unmittelbar hinter der Teilstromleitung 2 entweder über ein erstes Ventil 3, einer direkt nachgeschalteten Bypassleitung 5 und einer Rückführleitung 7 dem Verbrennungsmotor 1 wieder zugeführt oder gelangt über ein zweites Ventil 4, einem direkt nachgeschalteten Kühler 6 und einer Rückführleitung 7 erneut wieder zum Verbrennungsmotor 1. Ob der Teilstrom an Abgas nun über das erste Ventil 3 und der Bypassleitung 5 oder über das zweite Ventil 4 und dem direkt nachgeschalteten Kühler 6 geleitet wird, hängt von den Bedingungen des Abgases ab. Diese jeweiligen Verfahrensweisen werden mittels eines Sensors 8 überwacht. Dies bedeutet, dass entweder das erste Ventil 3 oder das zweite Ventil 4 geöffnet oder geschlossen wird, je nach den Bedingungen des Abgases. Bei niedrigen Temperaturen des Abgases beziehungsweise niedriger Motorleistung wird der Teilstrom über die Bypassleitung 5 geleitet, bei höheren Temperaturen beziehungsweise hoher Motorleistung über den direkt nachgeschalteten Kühler 6. Die Rückführleitung 7 mündet direkt in eine Gaseintrittsleitung 1b, die direkt mit dem Verbrennungsmotor 1 in Verbindung steht. In die Gaseintrittsleitung 1b wird zusätzlich über eine Zuführleitung 12 Luft zugegeben, so dass durch die Gaseintrittsleitung 1b eine Mischung aus dem Teilstrom an Abgas und Luft in den Verbrennungsmotor 1 gelangt. Der direkt nachgeschaltete Kühler 6 ist als Kühler mit flüssigem Kühlmittel ausgebildet. Er weist einen Kühlmitteleintritt 10 auf, durch welchen das Kühlmittel in den nachgeschalteten Kühler 6 gelangt. Über den direkt nachgeschalteten Kühler 6 gelangt das flüssige Kühlmittel anschließend in die Ventileinheit 9, die das erste Ventil 3, das zweite Ventil 4 und den Sensor 8 enthält. Die Ventileinheit 9 weist einen Kühlmittelautritt 11 auf, durch welchen das flüssige Kühlmittel aus dem System ausgetragen wird. Der Antrieb des ersten Ventils 3 und des zweiten Ventils 4 erfolgt über einen Elektromotor 12, der ebenfalls in der Ventileinheit 9 angeordnet ist. Der Kraftstoff für den Verbrennungsmotor 1 wird dem Verbrennungsmotor 1 über die Kraftstoffleitung 13 zugeführt.

## Patentansprüche

1. Verfahren zur Rückführung eines Teilstromes an Abgas zu einem Verbrennungsmotor (1) eines Kraftfahrzeuges, bei dem der Teilstrom durch eine hinter dem Abgasaustritt (1a) des Verbrennungsmotors (1) angeordnete Teilstromleitung (2) geleitet wird und unmittelbar danach entweder über ein erstes Ventil (3), einer direkt nachgeschalteten Bypassleitung (5) und einer Rückführleitung (7) dem Verbrennungsmotor (1) zugeführt wird oder über ein zweites Ventil (4), einem direkt nachgeschalteten Kühler (6) und einer Rückführleitung (7) dem Verbrennungsmotor (1) zugeführt wird, **dadurch gekennzeichnet, dass** das erste Ventil (3) und das zweite Ventil (4) in Abhängigkeit von den Abgasbedingungen geöffnet oder geschlossen werden, wobei dies von einem Sensor (8) überwacht wird.

2. Verfahren nach Anspruch 1, bei dem der Teilstrom durch eine Ventileinheit (9) geleitet wird, die das erste Ventil (3) und das zweite Ventil (4) und den Sensor (8) enthält.

3. Verfahren nach Anspruch 2, bei dem der Teilstrom hinter dem zweiten Ventil (4) durch einen als nachgeschalteten Kühler (6) angeordneten Kühler mit flüssigem Kühlmittel geleitet wird, wobei das flüssige Kühlmittel sowohl durch den nachgeschalteten Kühler (6) als auch durch die Ventileinheit (9) geleitet wird.

4. Vorrichtung zur Durchführung des Verfahrens nach einem der Ansprüche 1 bis 3, die aus einer Teilstromleitung (2) besteht, die mit einem ersten Ventil (3) und einem zweiten Ventil (4) verbunden ist, wobei das erste Ventil (3) über eine Bypassleitung (5) mit einer Rückführleitung (7) verbunden ist und das zweite Ventil (4) über einen direkt nachgeschalteten Kühler (6) mit einer Rückführleitung (7) verbunden ist, **dadurch gekennzeichnet, dass** ein Sensor (8) angeordnet ist, der sowohl die Ansteuerung des ersten Ventils (3) und des zweiten Ventils (4) in Abhängigkeit von den Abgasbedingungen überwacht.

5. Vorrichtung nach Anspruch 4, bei der als nachgeschalteter Kühler (6) ein Kühler mit flüssigem Kühlmittel angeordnet ist.

6. Vorrichtung nach Anspruch 4 oder Anspruch 5, bei der eine Ventileinheit (9) angeordnet ist, die das erste Ventil (3) und das zweite Ventil (4) und den Sensor (8) enthält.

7. Vorrichtung nach Anspruch 5 oder Anspruch 6, bei der der nachgeschaltete Kühler (6) einen Kühlmitteleintritt (10) und die Ventileinheit (9) einen Kühlmittelaustritt (11) enthalten.

## Claims

1. Method for recirculating a partial exhaust gas flow to an internal combustion engine (1) of a motor vehicle, in which the partial flow is guided through a partial flow line (2) connected downstream of the exhaust gas outlet (1a) of the internal combustion engine (1), and is immediately thereafter supplied to the internal combustion engine (1) either via a first valve (3), a bypass line (5) which is connected directly downstream and a recirculation line (7) or via a second valve (4), a radiator (6) which is connected directly downstream and a recirculation line (7), **characterized in that** the first valve (3) and the second valve (4) are opened or closed as a function of the exhaust gas conditions, this being monitored by a sensor (8).

2. Method according to Claim 1, in which the partial flow is guided through a valve unit (9) which comprises the first valve (3), the second valve (4) and the sensor (8).

3. Method according to Claim 2, in which the partial flow downstream of the second valve (4) is guided through a radiator (6), arranged as the radiator which is connected downstream, having liquid coolant, the liquid coolant being guided both through the radiator (6) which is connected downstream and through the valve unit (9).

4. Device for carrying out the method according to one of Claims 1 to 3, which comprises a partial flow line (2) which is connected to a first valve (3) and to a second valve (4), the first valve (3) being connected to a recirculation line (7) by means of a bypass line (5) and the second valve (4) being connected to a recirculation line (7) by means of a radiator (6) which is connected directly downstream, **characterized in that** a sensor (8) is arranged which monitors both the actuation of the first valve (3) and of the second valve (4) as a function of the exhaust gas conditions.

5. Device according to Claim 4, in which a radiator having liquid coolant is arranged as the radiator (6) which is connected downstream.

6. Device according to Claim 4 or Claim 5, in which a valve unit (9) is arranged which comprises the first valve (3), the second valve (4) and the sensor (8).

7. Device according to Claim 5 or Claim 6, in which the radiator (6) which is connected downstream comprises a coolant inlet (10) and the valve unit (9) comprises a coolant outlet (11).

## Revendications

1. Procédé permettant le renvoi d'un courant partiel de gaz d'échappement vers un moteur à combustion interne (1) d'un véhicule automobile, dans lequel le courant partiel est envoyé à travers une conduite de courant partiel (2) placée derrière la sortie de gaz d'échappement (1a) du moteur à combustion interne (1) et, immédiatement après, ou bien est ramené au moteur à combustion interne (1) à travers une première soupape (3), une conduite de dérivation (5) raccordée directement en aval et une conduite de renvoi (7), ou bien est envoyé au moteur à combustion interne (1) à travers une deuxième soupape (4), un radiateur (6) raccordé directement en aval et une conduite de renvoi (7), **caractérisé par le fait que** la première soupape (3) et la deuxième soupape (4) sont ouvertes ou fermées en fonction des conditions des gaz d'échappement, ce qui est surveillé par un capteur (8).

2. Procédé selon la revendication 1, dans lequel le courant partiel est envoyé à travers une unité à soupapes (9) qui comprend la première soupape (3), la deuxième soupape (4) et le capteur (8).

3. Procédé selon la revendication 2, dans lequel le courant partiel est envoyé, derrière la deuxième soupape (4), à travers un radiateur à fluide refroidissant liquide en tant que radiateur (6) monté en aval, le fluide refroidissant liquide étant envoyé non seulement à travers le radiateur (6) monté en aval, mais aussi à travers l'unité à soupapes (9).

4. Dispositif destiné à l'exécution du procédé selon l'une des revendications 1 à 3, ledit dispositif se composant d'une conduite de courant partiel (2) reliée à une première soupape (3) et à une deuxième soupape (4), où la première soupape (3) est reliée, à travers une conduite de dérivation (5), à une conduite de renvoi (7) et la deuxième soupape (4) est reliée, à travers un radiateur (6) monté directement en aval, à une conduite de renvoi (7), **caractérisé par le fait qu'**il est mis un capteur (8) en oeuvre qui surveille non seulement la commande de la première soupape (3), mais aussi celle de la deuxième soupape (4) en fonction des conditions des gaz d'échappement.

5. Dispositif selon la revendication 4, dans lequel un radiateur à fluide refroidissant liquide est monté en tant que radiateur (6) monté en aval.

6. Dispositif selon la revendication 4 ou la revendication 5, dans lequel est placée une unité à soupapes (9) qui renferme la première soupape (3), la deuxième soupape (4) et le capteur (8).

7. Dispositif selon la revendication 5 ou la revendication 6, dans lequel le radiateur (6) monté en aval comprend une entrée (10) de fluide refroidissant et l'unité à soupapes (9), une sortie (11) de fluide refroidissant.
